Europäisches Patentamt

European Patent Office

Office européen des brevets

(11) Veröffentlichungsnummer: **0 098 414 B1**

# (12) EUROPÄISCHE PATENTSCHRIFT

(45) Veröffentlichungstag der Patentschrift: **18.09.91**

(21) Anmeldenummer: **83105773.2**

(22) Anmeldetag: **13.06.83**

(51) Int. Cl.⁵: **B60N 2/18**

(54) **Vorrichtung zur Höhenverstellung von Sitzen, insbesondere Kraftfahrzeugsitzen.**

(30) Priorität: **08.07.82 DE 3225546**

(43) Veröffentlichungstag der Anmeldung:
**18.01.84 Patentblatt 84/03**

(45) Bekanntmachung des Hinweises auf die
Patenterteilung:
**18.09.91 Patentblatt 91/38**

(84) Benannte Vertragsstaaten:
**FR GB IT**

(56) Entgegenhaltungen:
**EP-A- 0 018 274        EP-A- 0 029 377**
**DE-A- 1 455 807        DE-A- 2 553 949**
**DE-A- 2 628 351        DE-A- 2 851 565**
**DE-A- 2 856 937        US-A- 1 957 785**
**US-A- 2 298 351        US-A- 2 594 882**
**US-A- 3 910 543**

(73) Patentinhaber: **KEIPER RECARO GmbH & Co.**
**Büchelstrasse 54-58**
**W-5630 Remscheid 14(DE)**

(72) Erfinder: **Strowik, Willibald**
**Albert-Schmidt-Allee 42**
**W-5630 Remscheid(DE)**
Erfinder: **Klüting, Bernd, Ing. grad.**
**Jung-Stilling-Weg 18**
**W-5608 Radevormwald(DE)**
Erfinder: **Thiel, Peter**
**Stockter Strasse 138**
**W-5630 Remscheid(DE)**
Erfinder: **Wingensiefen, Wilhelm, Ing. grad.**
**Hollweg**
**W-5068 Odenthal(DE)**
Erfinder: **Reinmöller, Adolf**
**Maxstrasse 29**
**W-5630 Remscheid(DE)**
Erfinder: **Walz, Jürgen, Ing. grad.**
**Gartenstrasse 22/1**
**W-7016 Korntal-Münchingen(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

## Beschreibung

Die Erfindung betrifft eine Vorrichtung zur Höhenverstellung von Fahrzeugsitzen, insbesondere von Kraftfahrzeugsitzen, deren Sitzträger mit dem Fahrzeugboden zugeordneten Schienen verbunden ist, wobei der vordere Endbereich jeden Sitzträgerseitenholmes jeweils über eine eine Zahnstange aufweisende Schwinge mit der zugehörigen Schiene drehgelenkig verbunden ist und in jedem Sitzträgerseitenholm ein in die Zahnstange eingreifendes Ritzel gelagert ist und die Ritzel auf einer die Sitzträgerseitenholme durchquerenden Welle angeordnet und über eine betätigbare Sperreinrichtung zusammen mit dem Sitzträger in wählbaren Höhenlagen stufenweise festlegbar sind.

Bei einer aus der DE-OS 29 26 450 bekannten Sitzverstellvorrichtung ist der Sitzträger in seinem hinteren Bereich derart abgestützt, daß er um eine horizontal verlaufende Achse gegenüber den dem Fahrzeugboden zugeordneten Schienen verschwenkt werden kann. Im vorderen Bereich durchquert den Sitzträger eine horizontal verschiebbar angeordnete Welle, deren Enden drehfest mit jeweils einem Ritzel verbunden ist. Diese Ritzel greifen in die Zahnstangen zweier an den Schienen abgestützter Schwingen, wodurch eine Schwenkbewegung des Sitzträgers gegenüber den Schienen verspannungsfrei möglich ist. Um die Höhenlage des Sitzträgers feststellen zu können, ist eine die in den Sitzträgerseitenholmen horizontal verschiebbare Welle aufnehmende Sperreinrichtung vorgesehen. Diese Sperreinrichtung besteht im wesentlichen aus beiderseits im vorderen Sitzbereich aus den dem Fahrzeugboden zugeordneten Schienen aufragenden Sperrstützen, die jeweils ein auf den hinteren Schwenkpunkt bezogenes, kreisbogenförmig gekrümmtes Langloch aufweist, das zu seiner Vorderseite hin in verschiedenen Höhenlagen Sperrausnehmungen zur Aufnahme der die Ritzel überragenden Wellenenden aufweist. Zur horizontalen Verschiebung der Wellenenden in den Sitzträgerseitenholmen ist an diesen ein Hebelsystem vorgesehen, welches durch Kraftspeicher selbsttätig eine Sperrlage der Welle in den Sperrausnehmungen bewirkt, während durch eine Handhabe diese Sperrlage aufhebbar ist, wodurch sich der Sitzträger in seinem vorderen Bereich anheben bzw. absenken läßt. Dabei sind die beiderseitigen Schwenkstützen derart ausgebildet, daß die Zahnritzel im ständigen Eingriff mit der an jeder Schwenkstütze festgelegten Zahnstange bleiben und eine synchrone Hubbewegung an beiden Sitzträgerseitenholmen bewirken. Mit dieser bekannten Vorrichtung läßt sich jedoch lediglich der vordere Sitzbereich bedarfsweise anheben bzw. absenken, während der Sitzträger und damit der Sitz in seinem hinteren Bereich im wesentlichen seine Höhenlage beibehält. In vielen Fällen ist es jedoch wünschenswert, den Sitz in seiner Höhenlage universell an die Bedürfnisse des Benutzers anpassen zu können. Dazu ist auch eine Höhenverstellmöglichkeit des hinteren Sitzbereichs erforderlich.

Aus der US-A 2 298 351 ist eine Höhenverstellvorrichtung für Sitzträger bekannt, bei der die Ritzel tragenden Achsen in horizontal verlaufenden Langlöchern einer Schiene angeordnet sind, während Zahnstangen feste Bestandteile der Sitzträgerseitenholme sind und in paralleler Beziehung zu den etwa senkrecht verlaufenden Schlitzen in den Sitzträgerseitenholmen stehen. In die vertikalen Schlitze greifen die Ritzel tragenden Achsen ebenfalls ein. Mit dieser Lösung kann zwar auch der vordere Sitzbereich gegenüber dem hinteren Sitzbereich und umgekehrt angehoben bzw. abgesenkt werden, wobei die einzustellende Sitzhöhenlage in Abstufungen sperrbar ist (Siehe den einleitenden Teil des Anspruches 1). Diese Sperreinrichtung besteht jedoch aus an den Sitzträgerseitenholmen schwenkbaren Zahnstangen, die über ein zentrales Hebelsystem in und außer Eingriff mit den Ritzeln schwenkbar sind. Diese Zahnstangen müssen nämlich zur Höhenverstellung des jeweiligen Sitzteilbereiches außer Eingriff von den betreffenden Ritzeln geschwenkt werden. Auch die mit den Ritzeln in Eingriff befindlichen und als Abstützung für die Sitzhöhenverstellung infragekommenden Zahnstangen sind am Sitzträgerseitenholm festgelegt und nicht an den Schienen selbst. Die Ritzel dieser Lösung behalten während der Verstellphase ihre Höhenlage infolge der in die Schlitze eingreifenden Achsen bei und können daher nicht ortsfest in den Sitzträgerseitenholmen gelagert sein. Die Lagerung der die Ritzel tragenden Achsen in sich kreuzenden Schlitzen ist insofern nachteilig, als daß die Achsen nur eine lineare Abstützung in den Schlitzen erfahren, so daß ein starker Verschleiß und eine große Abnutzung der Achsen an ihren Abstützstellen in den Schlitzen erfolgt. Die Verwendung weiterer, schwenkbarer Zahnstangen zur Festlegung der Ritzel an den ersten Zahnstangen stellt einen Aufwand dar, dessen Verwirklichung äußerst unwirtschaftlich ist.

Die Aufgabe der vorliegenden Erfindung besteht darin, eine Vorrichtung zur Höhenverstellung von Sitzen der eingangs genannten Art zu schaffen, bei der eine wirtschaftlich vertretbare Möglichkeit gegeben ist, einerseits den vorderen Sitzbereich gegenüber dem hinteren Sitzbereich anheben bzw. absenken zu können oder aber den hinteren Sitzbereich gegenüber dem vorderen Sitzbereich anheben oder absenken zu können und andererseits bedarfsweise auch den gesamten Sitzträger gegenüber dem Fahrzeugboden auf einfache Weise anheben oder absenken zu können.

Diese Aufgabe ist erfindungsgemäß dadurch gelöst, daß der hintere Endbereich jeden Sitzträgerseitenholmes ebenfalls auf einer den Sitzträger durchquerenden Welle gelagert ist, die mit einem in jedem Sitzträgerseitenholm gelagerten Ritzel drehfest verbunden ist, wobei jedes Ritzel in eine vertikal verlaufende, an jeder Schiene festgelegte Zahnstange eingreift und die Ritzel durch eine Sperreinrichtung in wählbaren Höhenlagen des Sitzträgers stufenweise festlegbar sind, und die Sperreinrichtung aus einer einseitig auf jeder Welle axial verschiebbar, jedoch undrehbar angeordneten Klauenscheibe gebildet ist, die im Sperrfall mit ihren Klauen in Ausnehmungen des Sitzträgerseitenholmes eingreift und durch eine Stelleinrichtung in Löselage ausrückbar ist. Dadurch läßt sich neben einer unabhängig vom hinteren Sitzbereich möglichen Höheneinstellung des vorderen Sitzbereiches auch der hintere Sitzbereich unabhängig von dem vorderen Sitzbereich in seiner Höhenlage einstellen und fixieren.

Zur Betätigung dieser Sperreinrichtung dient im einfachsten Fall eine der Sperreinrichtung zugeordnete Stelleinrichtung, die aus einem selbsttätig in Sperrlage rückstellenden, an der Klauenscheibe angreifenden Hebelmechanismus gebildet und an der Innenseite eines Sitzträgerseitenholmes festgelegt ist. Anstelle der Verwendung eines Hebelmechanismus zur Betätigung der Sperreinrichtung kann nach einem weiteren Ausgestaltungsmerkmal der Erfindung die Stelleinrichtung aus einer mit der Klauenscheibe gekuppelten, auf der Welle axial verschiebbaren Stellhülse gebildet sein, die einen gegen die Kraft einer Rückstellfeder betätigbaren Stelldaumen aufweist.

Die vorbeschriebene Stelleinrichtung ist ausschließlich separat jeder einzelnen Stellwelle zugeordnet, so daß die auf der Welle im vorderen Sitzbereich angeordnete Sperreinrichtung und die auf der Welle im hinteren Sitzbereich angeordnete Sperreinrichtung jeweils nur separat und für sich allein betätigt werden können. Es ist jedoch vielfach wünschenswert, die Verstellung sowohl des hinteren als auch des vorderen Sitzbereiches von einem zentralen Punkt aus vornehmen zu können. Zur Erfüllung dieses Erfordernisses bei der vorliegenden Vorrichtung ist ein Hebelmechanismus der dem vorderen Endbereich des Sitzträgerseitenholmes zugeordneten Sperreinrichtung und ein weiterer Hebelmechanismus der dem hinteren Endbereich des gleichen Sitzträgerseitenholmes zugeordneten Sperreinrichtung über einen gemeinsamen, am Sitzträgerseitenholm schwenkbar gelagerten Stellhebel wechselweise zur Überführung der Klauenscheibe in ihre Loslage betätigbar. Zu diesem Zweck weist der Stellhebel vorzugsweise an seinem Schwenkzapfen in dessen Axialrichtung geneigt verlaufende Kurvensektoren auf, wovon jede mit dem Ende eines Hebels jeder Sperreinrichtung in Eingriff bringbar ist.

Bei den bisher beschriebenen Lösungen ist die Verstellung der Sitzhöhenlage nur möglich, wenn der Sitzbenutzer den Sitz verläßt und nach Lösung der Sperreinrichtung diesen in die gewünschte Höhenlage verschwenkt bzw. anhebt. Nach Erreichen der gewünschten Höhenlage läßt sich diese arretieren, indem der Sitzbenutzer die Stelleinrichtung losläßt, so daß die Rückstellmittel die Sperrglieder in arretierenden Eingriff bringen. Damit nun der Sitzbenutzer während der Einstellbewegung des Sitzträgers auf dem Sitz verbleiben kann, ist nach einer vorteilhaften Ausgestaltung der Erfindung sowohl die Welle der vorderen als auch der hinteren Sperreinrichtung von einer das Sitzgewicht und das Normalgewicht eines Sitzbenutzers ausgleichenden Torsionsschraubenfeder umfaßt, deren eines Ende an der Welle und deren anderes Ende am Sitzträgerseitenholm festgelegt ist.

Zur Schaffung einer kompakten, die Stellbauteile schützenden Baueinheit umfassen die Seitenschalen die Schienen bzw. die Lagerkonsolen mit den daran befindlichen Schwingen mindestens bereichsweise sandwichartig.

Die Erfindung ist auf der Zeichnung in mehreren Ausführungen dargestellt, die nachfolgend näher erläutert sind. Es zeigen:

Fig. 1     einen mit dem Fahrzeugboden zugeordneten Schienen verbundenen Sitzträger in einer Seitenansicht, wobei sich der Sitzträger in einer vollständig abgesenkten Position befindet,

Fig. 2     den aus Fig. 1 ersichtlichen Sitzträger in einer Draufsicht, in dessen hinterem Bereich die Klauenscheibe zur Höhenverstellung des hinteren Sitzbereichs ausgekuppelt ist,

Fig. 3     den in den Fig. 1 und 2 dargestellten Sitzträger in einer teilweise aufgebrochenen Ansicht von der Innenseite her gesehen, wobei jedoch der Sitzträger gegenüber seiner dem Fahrzeugboden zugeordneten Schiene sich in einer angehobenen Position befindet,

Fig. 4     eine einseitige Abstützung des hinteren Sitzbereiches an der dem Fahrzeugboden zugeordneten Schiene in einem Horizontalschnitt nach der Linie IV-IV von Fig. 1,

Fig. 5     die vorderendige Abstützung des Sitzträgers an der dem Fahrzeugboden zugeordneten Schiene unter Zwischenschaltung einer an der Schiene schwenkbar gelagerten Schwinge in einem Längsschnitt nach der Linie V-V von Fig. 1,

Fig. 6     ein weiteres Ausführungsbeispiel einer einseitigen Abstützung des hinteren Sitzbereiches an der dem Fahrzeugboden zugeordneten Schiene, ebenfalls in einem der Fig. 4 analogen Horizontalschnitt, wobei auf der Welle eine mit der Klauenscheibe gekuppelte Stellhülse axial verschiebbar angeordnet ist,

Fig. 7 die aus Fig. 6 ersichtliche Stellhülse in einem Schnitt nach der Linie VII-VII von Fig. 6,

Fig. 8 ein weiteres Ausführungsbeispiel eines mit dem Fahrzeugboden zugeordneten Schienen verbundenen Sitzträgers mit einer zentralen Stelleinrichtung in einer Seitenansicht,

Fig. 9 den aus Fig. 8 ersichtlichen Sitzträger in einer Draufsicht,

Fig.10 die zentrale Stelleinrichtung in einem Längsschnitt der Linie X-X von Fig. 8,

Fig.11 statt einer den Sitzträger stützenden Schiene, zwei auf jeder Sitzlängsseite angeordnete und durch ein Montageband miteinander verbundene Lagerkonsolen zur Bildung eines Stützstegs einerseits und zur drehgelagerten Aufnahme einer Schwinge andererseits, in einem gegenüber den vorhergehenden Fig. vergrößertem Maßstab,

Fig.12 die aus Fig. 11 ersichtliche, eine Schwinge lagernde Lagerkonsole in einer Draufsicht nach der Schnittlinie XII-XII von Fig. 11.

Der aus einer Rückenlehne und einem Sitzteil gebildete, nicht dargestellte Fahrzeugsitz läßt sich auf einem Sitzträger 30 befestigen, der aus zwei sandwichartig zusammengesetzten Sitzträgerseitenholmen 31 und 31' sowie diese miteinander verbindenden Querträgern 32 und 32' gebildet ist. Jeder Sitzträgerseitenholm ist bei den dargestellten Ausführungsbeispielen aus zwei Seitenschalen 33 und 34 zusammengesetzt, wobei jede Seitenschale einen C-förmigen Querschnitt aufweist und die Seitenschalen mit ihrer offenen Seite zueinander gekehrt sind, während die äußere Seitenschale 34 die innere Seitenschale am Randbereich übergreift und mit dieser verschweißt ist. Unterhalb der Sitzträgerseitenholme 31 und 31' befinden sich dem Fahrzeugboden zugeordnete Schienen 35. Jede Schiene 35 besteht aus zwei Winkelstücken, die zu einer Einheit mit T-förmigem Querschnitt miteinander vereinigt sind. Im hinteren Sitzbereich weist jede Schiene 35 einen nach oben aufragenden Stützsteg 36 auf, in welchem sich ein in vertikaler Richtung erstreckendes Langloch 37 befindet. Im Bereich dieses Langloches ist der Stützsteg 36 der Schiene 35 derart aufgeweitet, daß zwischen den beiden Stegteilen ein Freiraum entsteht, in welchem eine Zahnstange 38 angeordnet und mit dem Stützsteg 36 beispielsweise durch Schweißen fest verbunden ist. Der Stützsteg 36 jeder Schiene 35 ragt in den Innenraum jeden Sitzträgerseitenholmes 31 und 31' im hinteren Sitzbereich ein, wobei es sich versteht, daß die Unterseite des Sitzträgers in diesen Bereichen offen ist. Jeder Sitzträgerseitenholm 31 und 31' weist im Bereich des in seinen Innenraum einragenden Stützsteges 36 in seinen Seitenschalen 33 und 34 Lageraugen 39 auf, in denen das Ende einer Welle 40 gelagert ist, wobei die beiderseitigen Wellenenden ein mit diesen drehfest verbundenes Ritzel 41 aufweisen, wobei jedes Ritzel in den Freiraum des Stützsteges 36 eingreift und mit der darin befestigten Zahnstange 38 kämmt. Dabei sind die beiderseitig sich an das Ritzel anschließenden Wellenstümpfe von Lagerbuchsen 42 umgriffen, die sich einerseits in den Lageraugen 39 der Sitzträgerseitenholme 31 und 31' abstützen und andererseits im Langloch 37 des jeweiligen Stützsteges 36 der Schienen 35 in vertikaler Richtung geführt sind. Dabei mag zur Verschleißminderung der Führungsbereich im Langloch 37 eines jeden Stützsteges durch ein Hutprofil 42' ausgekleidet sein. Zwischen der Außenseite des Stützsteges 36 und der Innenseite der Seitenschalen 33 und 34 eines jeden Sitzträgerseitenholmes 31 und 31' sind im wellennahen Bereich der Lageraugen 39 Distanzringe 43 angeordnet, durch welche die Sitzträgerseitenholme 31 und 31' mittig und mit einem ausreichenden, Reibung vermeidenden Spiel zur Längsachse der Schienen 35 gehalten sind. Die innere Seitenschale 33 eines jeden Sitzträgerseitenholmes ist im Bereich ihres ausgepreßten Lagerauges mit einer Vielzahl von, auf gleichem Teilkreisdurchmesser im gleichen Abstand angeordneten, Löchern 44 versehen, in welche eine gleiche Anzahl von zapfenförmigen Klauen 45 einer Klauenscheibe 46 eingreifen kann. Diese Klauenscheibe 46 ist auf einem innenseitigen Profilabschnitt 47 der Welle 40 axial verschiebbar, jedoch gegenüber der Welle 40 undrehbar gelagert.

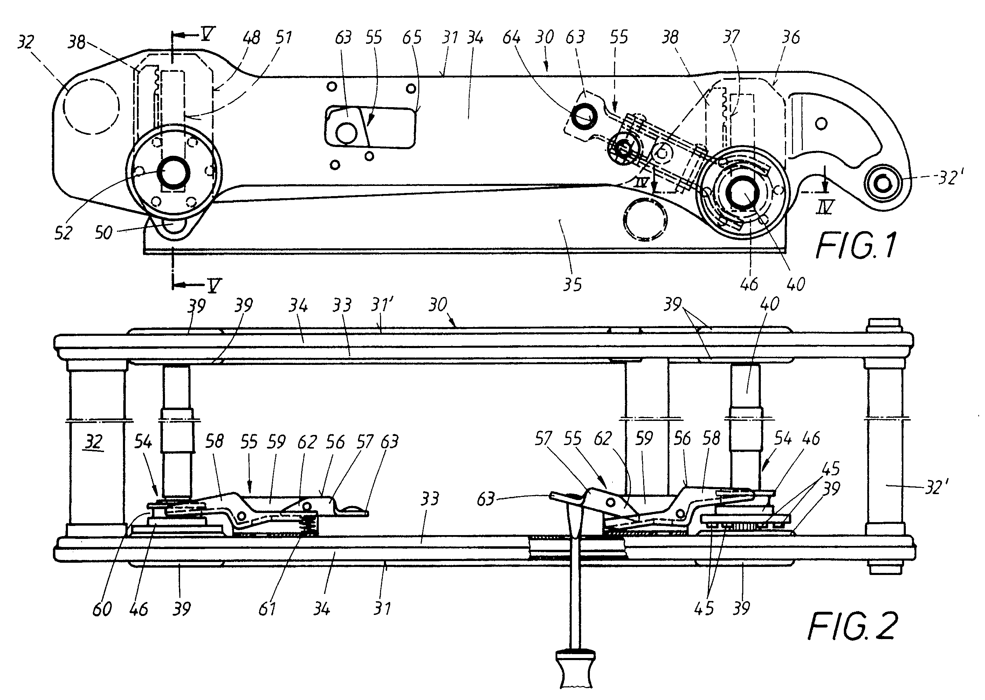

Im vorderen Sitzbereich greift in jeden Sitzträgerseitenholm 31 und 31' eine Schwinge 48 ein, die aus zwei im Abstand zueinander angeordneten Laschen 49 und 49' gebildet ist, die beiderseits des Mittelstegs der Schienen 35 im vorderen Sitzbereich auf einem den Steg der Schiene 35 durchdringenden Lagerbolzen 50 schwenkbar abgestützt sind. In den Laschen 49 und 49' ist jeweils ein dem Langloch 37 des Stützsteges 36 entsprechendes Langloch 51 angeordnet, wobei zwischen den Laschen 49 und 49' ebenfalls eine Zahnstange 38 befestigt ist. Jede Schwinge 48 wird ebenfalls von den Enden einer Welle 52 durchgriffen, wobei die Wellenenden ebenfalls mit einem Ritzel 41 drehfest verbunden sind, das jeweils mit der Zahnstange 38 der Schwinge 48 im Eingriff ist. Beiderseits des Ritzels 41 weisen die Wellenenden Lagerabschnitte auf, die sich über Lagerbuchsen 42 in den vorderseitigen Lageraugen 39 der Sitzträgerseitenholme 31 bzw. 31' abstützen. Gleichfalls greifen die Lagerbuchsen 42 in das Langloch 51 der Schwinge 48. Zwischen den Außenseiten der Schwinge 48 und den Innenseiten der Lageraugen 39 sind im Bereich der Enden der Welle 52 auch hier Distanzringe 43 angeordnet, wodurch die Längsmittenzuordnung von Schwingen 48 und dem jeweiligen Sitzträgerseitenholm 31 bzw. 31' erhalten bleibt. Auch im Bereich der Schwingen 48 weisen die Lageraugen 39 der inneren Seitenschalen 33 der Sitzträgerseitenholme 31 und 31' eine Vielzahl auf gleichem Teilkreisdurchmesser angeordnete lochartige Ausnehmungen 44 auf, in die ebenfalls bolzenartige Klauen 45 einer Klauenscheibe 46 eingreifen können, die auf sich an die Wellenenden innenseitig anschließenden Profilabschnitten 53 der Welle 52 undrehbar, jedoch in axialer Richtung verschiebbar, gelagert sind. Bei dem aus den Fig. 1 bis 7 ersichtlichen Ausführungsbeispiel bilden die Klauenscheiben 46 und 46' in Verbindung mit den Wellen 40 bzw. 52, auf welchen sie axial verschiebbar angeordnet sind, eine Sperreinrichtung 54, die nur auf einer, vorzugsweise der Kraftfahrzeugtüre zugekehrten Sitzlängsseite, beispielsweise am Sitzträgerseitenholm 31 angeordnet ist.

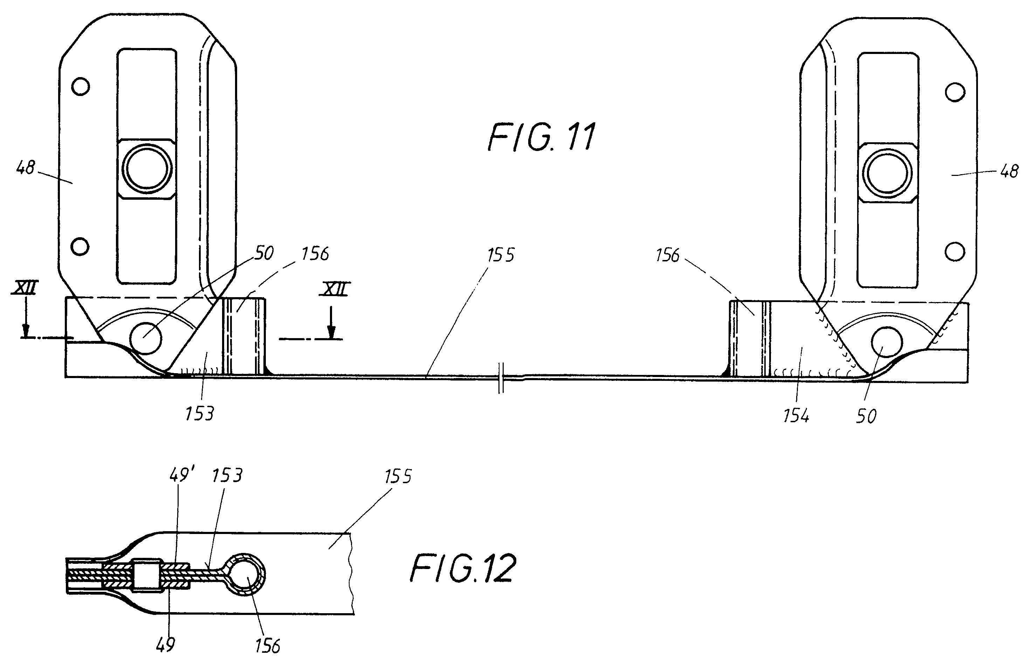

Statt den Sitzträger halternder und stützender Schienen 35 ist es auch denkbar, wie aus den Fig. 11 und 12 ersichtlich ist, auf jeder Sitzlängsseite im vorderen und hinteren Sitzbereich Lagerkonsolen 153 und 154 einzusetzen, die durch ein nicht tragendes, die Montage erleichterndes, Montageband 155 in ihrer Lage auf Abstand zueinander gehalten werden. Jede Lagerkonsole 153 und 154 besteht aus einem aufrechtstehenden, mit den Enden des Montagebandes fest verbundenen, derart aneinandergefalteten Flachstab, daß die Faltschlaufe eine Aufnahmebohrung für eine Befestigungsschraube darstellt. Dabei kann die Aufnahmebohrung als Durchgangsbohrung oder als Gewindebohrung 156 ausgebildet sein, in die eine von unten durch eine Befestigungsschiene oder den Fahrzeugboden eingeführte Schraube eingedreht werden kann. An beide Lagerkonsolen 153 und 154 ist jeweils eine oben beschriebene, aus den Laschen 49 und 49' gebildete Schwinge 48, mittels eines Lagerbolzens 50 angeschlossen. Während die beispielsweise im vorderen Sitzbereich angeordneten Schwingen 48 verschwenkt werden können, sind die hinteren Schwingen 48 mit der Lagerkonsole 153 verschweißt und erfüllen die gleiche Funktion wie die Stützstege 36 der Schienen 35. Durch die Verwendung von Lagerkonsolen wird einerseits eine Gewichtsersparnis und andererseits eine Verminderung des Bauraumes erzielt.

Zur Betätigung der Sperreinrichtung 54 ist dieser jeweils eine Stelleinrichtung 55 zugeordnet. Bei dem aus den Fig. 1 bis 3 ersichtlichen Ausführungsbeispiel wird die Stelleinrichtung 55 durch einen Hebelmechanismus 56 gebildet. Dieser Hebelmechanismus besteht aus zwei sich gegenseitig beaufschlagenden, zweiseitigen Hebeln 57 und 58, die an einem auf der Innenseite des Sitzträgerseitenholmes 31 befestigten, etwa U-förmigen Hebelträger 59 schwenkbar gelagert sind. Dabei ist der Stellarm des Hebels 58 gabelartig ausgebildet und greift in eine Ringnut 60 der Klauenscheibe 46 ein. Der Kraftarm des Hebels 58 ist einerseits von einer zwischen diesem und dem Hebelträger 59 angeordneten Druckfeder 61 unterseitig beaufschlagt, während auf die Außenseite des Kraftarmes des Hebels 58 der Stellarm 62 des Hebels 57 einwirkt. Dabei ist die Druckfeder 61 im wesentlichen unterhalb des Drehpunktes des Hebels 57 angeordnet, damit dieser in der aus Fig. 2 aus der linken Seite ersichtlichen Sperrlage verbleibt. Zumindest der Sitzträgerseitenholm 31 weist im Bereich des Kraftarmes 63 des Hebels 57 Ausnehmungen 64 bzw. 65 auf, durch welche - wie beispielsweise in Fig. 2 angedeutet ist - ein Schraubendreher gesteckt werden kann, um den Kraftarm 63 im Sinne einer die Löseverschiebung der Klauenscheibe 46 bewirkenden Hebelbewegung gegen die Kraft der Druckfeder 61 zu verschwenken, wie dies auf der rechten Seite in Fig. 2 dargestellt ist.

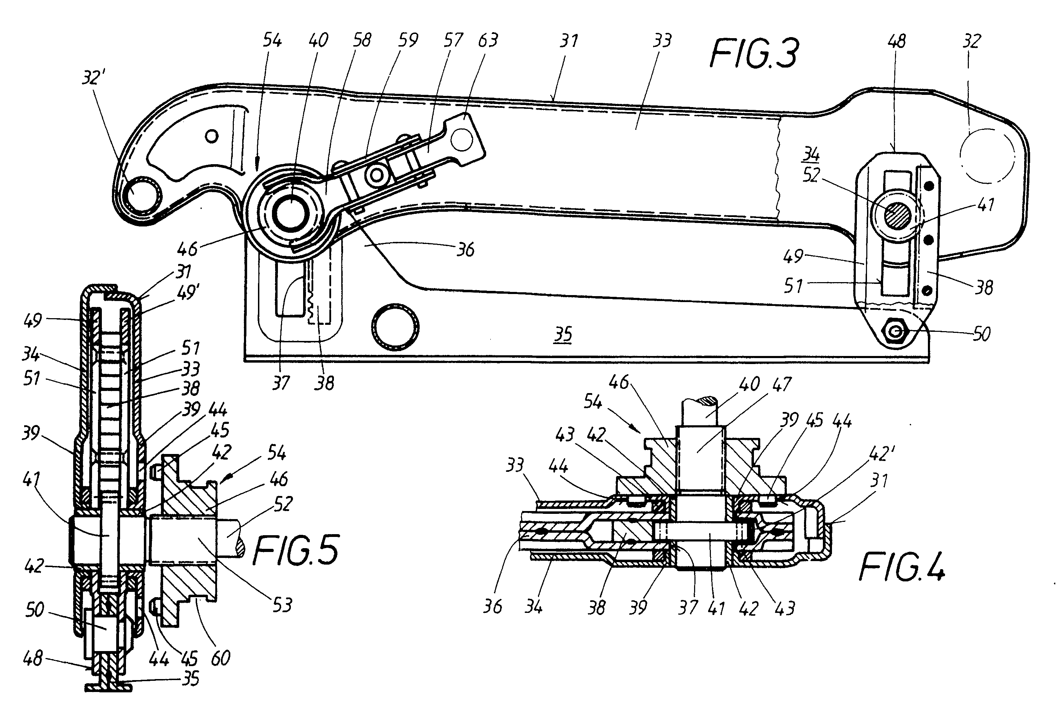

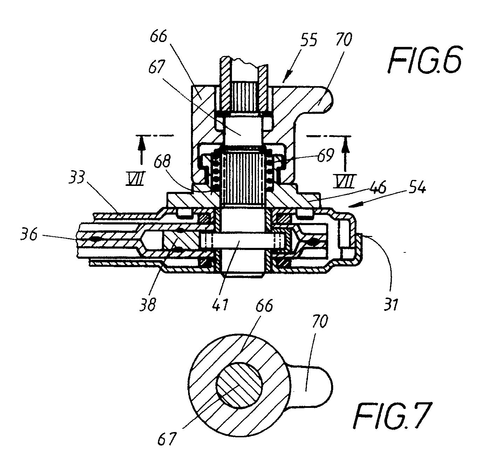

Wenn der Sitzträger 30 gegenüber der Schiene 35 in der eingestellten Höhenlage verbleiben soll, so ist die Klauenscheibe in der aus Fig. 2 auf der linken Seite und aus Fig. 4 ersichtlichen Lage mit der Seitenschale 33 des Sitzträgerseitenholmes 31 gekuppelt. Die Klauen 45 der Klauenscheibe 46 greifen dabei in die Löcher 44 des Lagerauges 39 des Sitzträgerseitenholmes ein und verhindern durch die drehfeste Verbindung der Klauenscheibe 46 mit der Welle eine Drehbewegung des ebenfalls mit der Welle drehfest verbundenen Ritzels 41 gegenüber der fest in der Schwinge 48 angeordneten Zahnstange 38. Somit bleibt die aus der linken Seite von Fig. 3 ersichtliche Sperrlage erhalten, so daß sich der vordere Bereich des Sitzträgers 30 über die Lageraugen 39 auf der im Sperrfall undrehbar gehaltenen Welle 52 abstützt. Wenn jedoch, wie aus der rechten Seite von Fig. 2 ersichtlich ist, die Klauenscheibe 46 in ihre Freigabelage zurückgeschoben ist, treten die Klauen 45 der Klauenscheibe 46 aus den Löchern 44 im Lagerauge 39 der Seitenschale 33 des Sitzträgerseitenholmes 31 aus. Die Klauenscheibe 46 nimmt dabei die aus Fig. 5 ersichtliche Stellung auf ihrem Profilabschnitt der Welle ein. Wie unschwer zu erkennen ist, wälzt sich dann das Ritzel 41 an der Zahnstange 38 ab, wenn beispielsweise der Sitzträger 30 gegenüber der Schiene 35 angehoben bzw. abgesenkt wird. Bei Überführung des Hebelmechanismus 56 in die aus Fig. 2, rechte Seite, ersichtliche Lage kann durch gleichzeitiges Anheben oder Absenken des hinteren Sitzbereiches die Höhenlage des Sitzträgers 30 gegenüber der Schiene 35 im hinteren Sitzbereich verstellt werden. Nach Erreichen der gewünschten Höhenlage wird die Beaufschlagung des Hebels 57 beispielsweise durch den dargestellten Schraubendreher beendet, so daß über die Druckfeder 61 und den Hebel 58 die Klauenscheibe 46 mit ihren Klauen 45 wieder in die Löcher 44 in den Lageraugen 39 des Sitzträgerseitenholmes 31 zurückgedrückt wird. In dieser Lage ist die zuvor beschriebene Sperrung wieder hergestellt und der Sitzträger in der eingestellten Lage gehalten. Dabei versteht es sich, daß nur eine dem Teilungsabstand der Klauen 45 bzw. der Löcher 44 entsprechende abgestufte Sperrlage erzielbar ist.

Bei dem aus den Fig. 6 und 7 ersichtlichen Ausführungsbeispiel entspricht die Sperreinrichtung 54 derjenigen, die aus den Fig. 1 bis 5 ersichtlich ist. Unterschiedlich ist hier jedoch die Stelleinrichtung 55. Diese besteht im wesentlichen aus einer mit der Klauenscheibe 46 gekoppelten Stellhülse 66, die auf einem sich innenseitig an den Profilabschnitt 47 anschließenden Wellenabschnitt 67 axial verschiebbar angeordnet ist. Die Klauenscheibe 46 ist jedoch bereichsweise mit einer Ausnehmung 68 versehen, die eine Rückstellfeder 69 aufnimmt, die sich an einem, am Wellenabschnitt 67 festgelegten Stützring anlegt. Am Außenumfang der Stellhülse 66 ist ein Stelldaumen 70 angeordnet, durch den die Stellhülse und die mit dieser gekuppelte Klauenscheibe 46 in eine Loslage gegen die Kraft der Rückstellfeder 69 überführt werden kann.

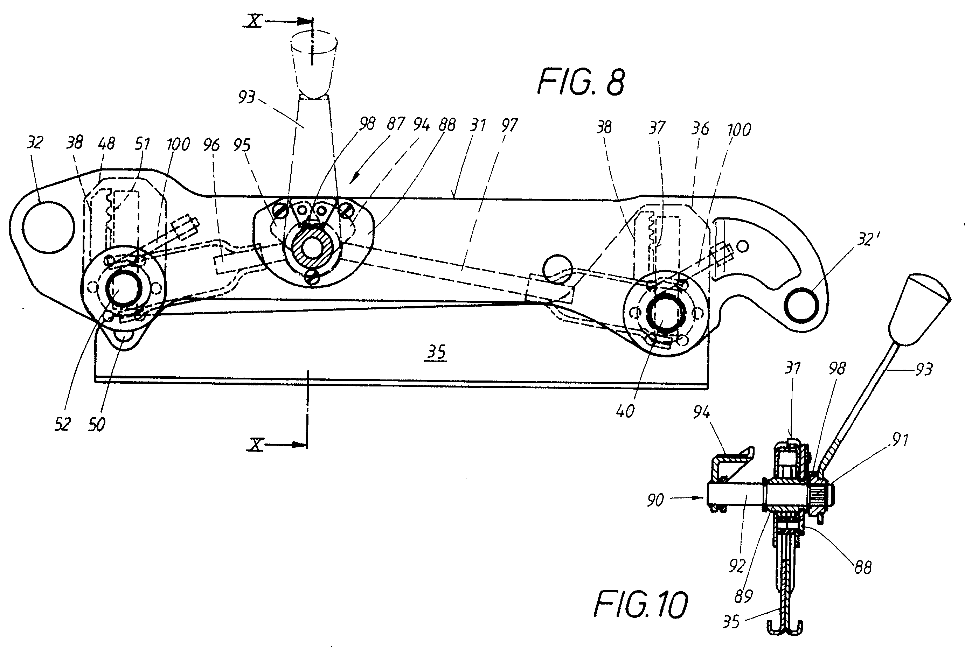

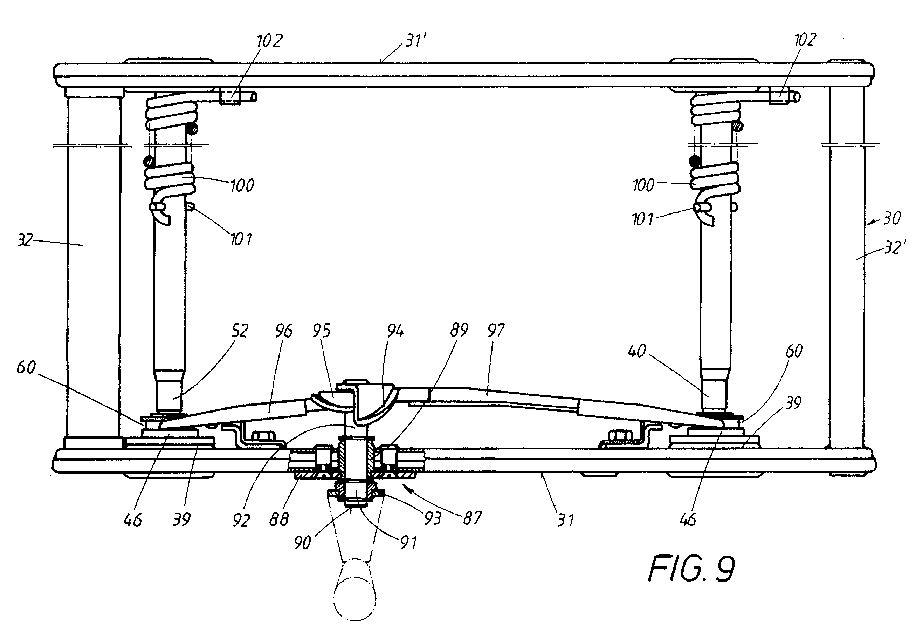

Bei der zuvor beschriebenen Ausführung ist jede Welle im vorderen und auch im hinteren Sitzbereich separat und einzeln durch dieser Welle speziell zugeordnete Stelleinrichtungen zu betätigen. Aus den Fig. 8 bis 10 ist eine Ausführungsform ersichtlich, bei der eine zentrale, manuell betätigbare Stelleinrichtung 87 vorgeschlagen wird. Diese Stelleinrichtung umfaßt ein Flanschlager 88, das den Sitzträgerseitenholm 31 mit einer Lagerbuchse 89 durchdringt und am Sitzträgerseitenholm verschraubt ist. Die Lagerbuchse 89 nimmt einen Schwenkzapfen 90 auf, der einen auf der Außenseite des Sitzträgerseitenholmes ausragenden Zapfenbereich 91 und einen zur Innenseite des Sitzträgers 30 hinweisenden Zapfenbereich 92 aufweist. Auf dem äußeren Zapfenbereich 91 ist ein Stellhebel 93 drehfest angeordnet, während der zur Innenseite des Sitzträgers weisende Zapfenbereich 92 an seinem freien Ende vesetzt zueinander angeordnete Kurvensektoren 94 und 95 aufweist, die drehfest beispielsweise durch Verschweißung, mit dem inneren Zapfenbereich 92 verbunden sind.

Der innere Zapfenbereich 92 des Schwenkzapfens 90 nimmt unmittelbar vor den Kurvensektoren 94 und 95 die Enden zweier Hebel 96 und 97 auf, die drehgelenkig am Sitzträgerseitenholm 31 gelagert sind und über Gabelschuhe in die Ringnut 60 der Klauenscheiben 46 eingreifen. Dabei dient der Hebel 96 der Entkupplung der der Welle 52 zugeordneten Klauenscheibe 46, während der Hebel 97 der Entkupplung der der Welle 40 zugehörigen Klauenscheibe 46 dient. Der mit dem Schwenkzapfen 90 verbundene Kurvensektor 94 beaufschlagt den Hebel 97, während der Kurvensektor 95 den Hebel 96 beaufschlagt. Dabei sind die Kurvensektoren 94 und 95 derart ausgebildet und zueinander angeordnet, daß bei einer Verschwenkung des Stellhebels 93 in der aus Fig. 8 ersichtlichen Darstellung im Uhrzeigersinn, allein der Hebel 97 derart verschwenkt wird, daß über seinen Gabelschuh die auf der Welle 40 sitzende Klauenscheibe 46 im Lösesinne verschoben wird. Wenn jedoch der Stellhebel 93 in der aus Fig. 8 ersichtlichen Darstellung entgegen dem Uhrzeigersinn schwenkt, so wird der Kurvensektor 95 allein am Hebel 96 derart wirksam, so daß die der Welle 52 zugeordnete Klauenscheibe 46 im Lösesinne verschoben wird. Wenn jedoch der Stellhebel wieder in die aus Fig. 8 ersichtliche Null-Lage zurückgeführt wird, in welcher der Stellhebel durch einen mit einer Nase in eine Nut seiner Nabe eingreifenden Federwinkel 98 arretiert wird, so drückt eine Rückstellfeder 69 - wie sie in Fig. 6 dargestellt ist - auch die Klauenscheiben 46 mit ihren Klauen wieder in die Ausnehmungen in den Lageraugen 39 des Sitzträgerseitenholmes 31 sperrend zurück. Um jedoch eine Höhenverstellbewegung des Sitzträgers 30 auch dann vornehmen zu können, wenn der Sitzbenutzer auf dem Sitz verbleibt, ist jede Welle 40 bzw. 52 von einer gewichtsausgleichenden Torsionsschraubenfeder 100 umgriffen. Diese Torsionsschraubenfeder weist an einem Ende eine Öse auf, die an einem die jeweilige Welle durchquerenden Stift 101 festgelegt ist, während sich das andere Ende der Torsionsschraubenfeder an einem Vorsprung 102 des Sitzträgerseitenholmes 31' anlegt. Dabei ist die Torsionsschraubenfeder 100 derart vorgespannt, daß bei Lösung der entsprechenden Klauenscheibe 46 die jeweilige Welle in einem solchen Drehsinn gedreht wird, daß das Ritzel 41 in der Zahnstange 38 nach oben läuft und somit den der jeweiligen Welle zugehörigen Sitzträgerbereich anhebt. Durch den Einsatz beiderseitiger, an einem Sitzende angeordneter Schwingen, ist ein infolge der Schwenkbewegung entstehender Distanzunterschied zwischen dem Zentrum der Welle 40 und den Lagerbolzen 50 der Schwinge möglich.

Die zuvor beschriebenen Sperreinrichtungen verwenden zur Arretierung der Höheneinstell-Lage Klauenscheiben 46 bzw. 46'.

Bei den zuvor beschriebenen Ausführungsbeispielen sind die Schienen 35, wie oben erwähnt, aus zu einer T-förmigen Schiene zusammengesetzten Winkelstücken gebildet. Diese Schiene kann gegebenenfalls auf einer Führungsschienenanordnung oder aber, wenn keine Sitzlängsverschiebung gewünscht wird, unmittelbat auf dem Fahrzeugboden angeordnet werden.

Bezugszeichenliste:

| | |
|---|---|
| 30 | Sitzträger |
| 31 | Sitzträgerseitenholm |
| 31' | Sitzträgerseitenholm |
| 32 | Querträger |
| 32' | Querträger |
| 33 | Seitenschale |
| 34 | Seitenschale |
| 35 | Schiene |
| 36 | Stützsteg |
| 37 | Langloch |
| 38 | Zahnstange |
| 39 | Lagerauge |
| 40 | Welle |
| 40' | Welle |
| 41 | Ritzel |
| 42 | Lagerbuchse |
| 42' | Hutprofil |
| 43 | Distanzring |
| 44 | Loch/Ausnehmung |
| 45 | Klaue |
| 46 | Klauenscheibe |
| 46' | Klauenscheibe |
| 47 | Profilabschnitt |
| 48 | Schwinge |
| 49 | Lasche |
| 49' | Lasche |
| 50 | Lagerbolzen |
| 51 | Langloch |
| 52 | Welle |
| 53 | Profilabschnitt |
| 54 | Sperreinrichtung |
| 55 | Stelleinrichtung |
| 56 | Hebelmechanismus |
| 57 | Hebel |
| 58 | Hebel |
| 59 | Hebelträger |
| 60 | Ringnut |
| 61 | Druckfeder |
| 62 | Stellarm |
| 63 | Kraftarm |
| 64 | Ausnehmung |
| 65 | Ausnehmung |
| 66 | Stellhülse |
| 67 | Wellenabschnitt |
| 68 | Ausnehmung |
| 69 | Rückstellfeder |
| 70 | Stelldaumen |

| | |
|---|---|
| 87 | Stelleinrichtung |
| 88 | Flanschlager |
| 89 | Lagerbuchse |
| 90 | Schwenkzapfen |
| 91 | Zapfenbereich |
| 92 | Zapfenbereich |
| 93 | Stellhebel |
| 94 | Kurvensektor |
| 95 | Kurvensektor |
| 96 | Hebel |
| 97 | Hebel |
| 98 | Federwinkel |
| 99 | Rückstellfeder |
| 100 | Torsionsschraubenfeder |
| 101 | Stift |
| 102 | Vorsprung |
| 153 | Lagerkonsole |
| 154 | Lagerkonsole |
| 155 | Montageband |
| 156 | Gewindebohrung |

**Patentansprüche**

1. Vorrichtung zur Höhenverstellung von Fahrzeugsitzen, insbesondere Kraftfahrzeugsitzen, deren Sitzträger (30) mit dem Fahrzeugboden zugeordneten Schienen (35) verbunden ist, wobei der vordere Endbereich jeden Sitzträgerseitenholmes (31, 31') jeweils über eine eine Zahnstange (38) aufweisende Schwinge (48) mit der zugehörigen Schiene (35) drehgelenkig verbunden ist und in jedem Sitzträgerseitenholm (31, 31') ein in die Zahnstange (38) eingreifendes Ritzel (41) gelagert ist und die Ritzel (41) auf einer die Sitzträgerseitenholme durchquerenden Welle (52) angeordnet und über eine betätigbare Sperreinrichtung (54) zusammen mit dem Sitzträger (30) in wählbaren Höhenlagen stufenweise festlegbar sind,

**dadurch gekennzeichnet,**

daß der hintere Endbereich jeden Sitzträgerseitenholmes (31, 31') ebenfalls auf einer den Sitzträger (30) durchquerenden Welle (40) gelagert ist, die mit einem in jedem Sitzträgerseitenholm gelagerten Ritzel (41) drehfest verbunden ist, wobei jedes Ritzel (41) in eine vertikal verlaufende, an jeder Schiene (35) festgelegte Zahnstange (38) eingreift und die Ritzel durch eine Sperreinrichtung (54) in wählbaren Höhenlagen des Sitzträgers (30) stufenweise festlegbar sind und die Sperreinrichtung (54) aus einer einseitig auf jeder Welle (40,52) axial verschiebbar, jedoch undrehbar angeordneten Klauenscheibe (46) gebildet ist, die im Sperrfall mit ihren Klauen (45) in Ausnehmungen (44) des Sitzträgerseitenholmes (31,31') eingreift und durch eine Stelleinrichtung (55) in Löselage ausrückbar ist.

2. Vorrichtung nach Anspruch 1, dadurch gekennzeichnet, daß die der Sperreinrichtung (54) zugeordnete Stelleinrichtung (55) aus einem selbsttätig in Sperrlage rückstellenden, an der Klauenscheibe (46) angreifenden Hebelmechanismus (56) gebildet ist, der an der Innenseite eines Sitzträgerseitenholmes (31) festlegbar ist.

3. Vorrichtung nach Anspruch 1 dadurch gekennzeichnet, daß die Stelleinrichtung aus einer mit der Klauenscheibe (46) gekoppelten, auf der Welle (67) axial verschiebbaren Stellhülse (66) gebildet ist, die einen gegen die Kraft einer Rückstellfeder (69) betätigbaren Stelldaumen (70) aufweist.

4. Vorrichtung nach Anspruch 2, dadurch gekennzeichnet, daß der Hebelmechanismus (96,97) der dem vorderen Endbereich des Sitzträgerseitenholmes (31) zugeordneten Sperreinrichtung (54) und der Hebelmechanismus (96,97) der dem hinteren Endbereich des gleichen Sitzträgerseitenholmes (31) zugeordneten Sperreinrichtung (54) über einen gemeinsamen, am Sitzträgerseitenholm (31) schwenkbar gelagerten Stellhebel (93) wechselweise zur Überführung der Klauenscheiben (46) in ihre Loslage betätigbar ist.

5. Vorrichtung nach Anspruch 4, dadurch gekennzeichnet, daß der Stellhebel (93) an seinem Schwenkzapfen (90) in dessen Axialrichtung geneigt verlaufende Kurvensektoren (54,95) aufweist, wovon jede mit dem Ende eines Hebels (96 bzw. 97) jeder Sperreinrichtung in Eingriff bringbar ist.

6. Vorrichtung nach Anspruch 4 oder 5, dadurch gekennzeichnet, daß die Wellen (40,52) sowohl der vorderen als auch der hinteren Sperreinrichtung von das Sitzgewicht und das Normalgewicht eines Sitzbenutzers ausgleichenden Torsionsschraubenfedern (100) umfaßt sind, deren eines Ende an der Welle (40 bzw. 52) und deren anderes Ende am Sitzträgerseitenholm (31') festgelegt ist.

7. Vorrichtung nach einem oder mehreren der vorhergehenden Ansprüche, dadurch gekennzeichnet, daß die Seitenschalen (33 und 34) die Schienen (35) bzw. die Lagerkonsolen (153,154) mit den daran befindlichen Schwingen (48) mindestens bereichsweise sandwichartig umfassen.

## Claims

1. Device for the height adjustment of vehicle seats, in particular motor vehicle seats, the seat carrier (30) of which is connected to rails (35) associated with the vehicle floor, wherein the front end region of each seat carrier side member (31, 31') is pivotably connected to the associated rail (35) by way of a respective rocker arm (48) having a toothed rack (38) and a pinion (41) engaging into the toothed rack (38) is mounted in each seat carrier side member (31, 31') and the pinions (41) are arranged on a shaft (52) passing through the seat carrier side members and can be stepwise fixed together with the seat carrier (30) at selectible positions in respect of height by way of an actuable locking device (54) characterised in that the rear end region of each seat carrier side member (31, 31') is also mounted on a shaft (40) which passes through the seat carrier (30) and which is non-rotatably connected to a pinion (41) mounted in each seat carrier side member, wherein each pinion (41) engages into a vertically extending toothed rack (38) fixed to each rail (35) and the pinions can be stepwise fixed by a locking device (54) in selectible positions in respect of height of the seat carrier (30) and the locking device (54) is formed from a dog disc (46) which is arranged at one side on each shaft (40, 52) in such a way as to be axially displaceable but non-rotatable and which in the locking situation engages with its dogs (45) into openings (44) in the seat carrier side member (31, 31') and can be disengaged into the release position by a control device (55).

2. A device according to claim 1 characterised in that the control device (55) associated with the locking device (54) is formed from a lever mechanism (56) which automatically returns to the locking position and which engages the dog disc (46) and which can be fixed to the inside of a seat carrier side member (31).

3. A device according to claim 1 characterised in that the control device is formed from a control sleeve (66) which is coupled to the dog disc (46) and which is axially displaceable on the shaft (67) and which has a control projection (70) which can be actuated against the force of a return spring (69).

4. A device according to claim 2 characterised in that the lever mechanism (96, 97) of the locking device (54) associated with the front end region of the seat carrier side member (31) and the lever mechanism (96, 97) of the locking device (54) associated with the rear end region of the same seat carrier side member (31) can be actuated alternately by way of a common control lever (93) mounted pivotably on the seat carrier side member (31), for moving the dog discs (46) into their release position.

5. A device according to claim 4 characterised in that the control lever (93) has on its pivot pin (90) cam sectors (54, 95) which extend inclinedly in the axial direction of the pivot pin, each of which cam sectors can be brought into engagement with the end of a lever (96 or 97 respectively) of each locking device.

6. A device according to claim 4 or claim 5 characterised in that the shafts (40, 52) both of the front and also the rear locking device are embraced by torsion coil springs (100) which compensate for the weight of the seat and the normal weight of a seat occupant, one end of the springs being secured to the shaft (40 and 52 respectively) and the other end being secured to the seat carrier side member (31').

7. A device according to one or more of the preceding claims characterised in that the side casings (33 and 34) embrace in a sandwich-like construction at least in a region-wise fashion the rails (35) or the mounting brakcets (153, 154) with the rocker arms (48) disposed thereon.

**Revendications**

1. Dispositif de réglage de la position en hauteur d'un siège de véhicule, notamment d'un siège de véhicule à moteur, dont le support de siège (30) est monté sur des rails (35) fixés sur le plancher du véhicule, dispositif du type dans lequel la zone extrême avant de chaque longeron latéral (31, 31') du support de siège est montée de manière articulée en rotation sur le rail associé (35) au moyen d'une bielle oscillante (48) comportant une crémaillère (38), tandis qu'un pignon (41) engrenant avec la crémaillère (38) est monté dans chaque longeron latéral (31, 31') du support de siège et que les pignons (41) sont disposés sur un arbre (52) s'étendant transversalement aux longerons latéraux du support de siège et sont agencés de façon à pouvoir être immobilisés en même temps que le support de siège (30), dans des positions en hauteur étagées et pouvant être sélectionnées, au moyen d'un dispositif de verrouillage (54) agencé de façon à pouvoir être actionné, caractérisé en ce la zone extrême arrière de chaque longeron latéral (31, 31') du support de siège est montée aussi sur un arbre (40) transversal au support de siège (30) et solidaire en rotation d'un pignon (41) monté dans chaque longeron latéral du support de siège, chaque pignon (41) engrenant avec une crémaillère (38) verticale fixée sur chaque rail (35), tandis que les pignons sont agencés de façon à pouvoir être immobilisés par un dispositif de verrouillage (54) dans des positions en hauteur du support de siège (30) qui sont étagées et peuvent être sélectionnées et que le dispositif de verrouillage (54) est constitué d'un disque (46) à saillies de crabotage qui est disposé de façon à pouvoir se déplacer axialement, dans un sens, sur chaque arbre (40, 52), sans toutefois pouvoir pivoter sur celui-ci, et qui, en position de verrouillage, s'engage par ses saillies de crabotage (45) dans des logements (44) du longeron latéral (31, 31') du support de siège, en pouvant être débrayé, en position libre, par un dispositif de positionnement (55).

2. Dispositif suivant la revendication 1, caractérisé en ce que le dispositif de positionnement (55) associé au dispositif de verrouillage (54) est constitué d'un mécanisme à levier (56) de rappel automatique en position de verrouillage, ce mécanisme à levier (56) agissant sur le disque (46) à saillies de crabotage et étant agencé de façon à pouvoir être immobilisé sur le côté intérieur d'un longeron latéral (31) du support de siège.

3. Dispositif suivant la revendication 1, caractérisé en ce que le dispositif de positionnement consiste en une douille de positionnement (66) qui est accouplée au disque (46) à saillies de crabotage et est agencée de façon à pouvoir être déplacée axialement sur l'arbre (67) et qui comporte un doigt de positionnement (70) agencé de façon à pouvoir être actionné à l'encontre de la force d'un ressort de rappel (69).

4. Dispositif suivant la revendication 2, caractérisé en ce que le mécanisme à levier (96, 97) du dispositif de verrouillage (54) associé à la zone extrême avant du longeron latéral (31) du support de siège et le mécanisme à levier (96, 97) du dispositif de verrouillage (54) associé à la zone extrême arrière du même longeron latéral (31) du support de siège sont agencés de façon à pouvoir être actionnés par une manette commune de positionnement (93) montée de façon à pouvoir basculer sur le longeron latéral (31) du support de siège, en vue de déplacer tour à tour les disques (46) à saillies de crabotage vers leur position libre.

5. Dispositif suivant la revendication 4, caractérisé en ce que, sur son pivot de basculement (90), la manette de positionnement (93) comporte des secteurs de forme courbe (94, 95) qui s'étendent d'une manière inclinée dans la direction axiale du pivot de basculement (90) et dont chacun est agencé de façon à pouvoir être amené en prise sur l'extrémité d'un levier (96 ou 97) de chaque dispositif de verrouillage.

6. Dispositif suivant la revendication 4 ou 5, caractérisé en ce que les arbres (40, 52), tant du dispositif de verrouillage avant que du dispositif de verrouillage arrière, sont entourés par des ressorts hélicoïdaux de torsion (100) qui compensent le poids du siège et le poids normal d'un utilisateur de ce dernier et dont une extrémité est fixée sur l'arbre (40 ou 52) et l'autre extrémité, sur le longeron latéral (31') du support de siège.

7. Dispositif suivant une ou plusieurs des revendications précédentes, caractérisé en ce que des coquilles latérales (33 et 34) entourent, en sandwich et au moins par endroits, les rails (35) ou les consolespaliers (153, 154), y compris les bielles oscillantes (48) montées sur celles-ci.

FIG.1

FIG.2

EP 0 098 414 B1

FIG.3

FIG.4

FIG.5

EP 0 098 414 B1

FIG.6

FIG.7

EP 0 098 414 B1

FIG. 8

FIG.10

FIG.9

FIG. 11

48

50   156

XII          XII

155

156

48

153

154   50

49'   153

155

49   156

FIG. 12

EP 0 098 414 B1